# EUROPÄISCHE PATENTSCHRIFT

(11) **EP 3 645 440 B1**
(45) Veröffentlichungstag und Bekanntmachung des Hinweises auf die Patenterteilung: **26.05.2021**
(21) Anmeldenummer: 18733615.1
(22) Anmeldetag: 26.06.2018
(51) Int. Cl.: B66B 1/34

(54) **POSITIONSBESTIMMUNGSSYSTEM UND VERFAHREN ZUR ERMITTLUNG EINER KABINENPOSITION EINER AUFZUGKABINE**
POSITION DETERMINING SYSTEM AND METHOD FOR DETERMINING A POSITION OF A LIFT CABIN
SYSTÈME DE DÉTERMINATION DE POSITION ET PROCÉDÉ DE TRANSMISSION D'UNE POSITION DE CABINE D'UN ASCENSEUR

(30) Priorität: 27.06.2017 EP 17178195
(43) Veröffentlichungstag der Anmeldung: 06.05.2020
(73) Patentinhaber: Inventio AG, 6052 Hergiswil (CH)
(72) Erfinder: MICHEL, David, 6343 Rotkreuz (CH); BIRRER, Eric, 6033 Buchrain (CH); PFISTER, Martin, 6003 Luzern (CH)
(86) Internationale Anmeldenummer: PCT/EP2018/067141
(87) Internationale Veröffentlichungsnummer: WO 2019/002309

(56) Entgegenhaltungen:
- EP-B1- 1 412 274

## Beschreibung

Die Erfindung betrifft ein Positionsbestimmungssystem zur Ermittlung einer Kabinenposition einer in einem Aufzugschacht verfahrbaren Aufzugkabine gemäss dem Oberbegriff des Anspruchs 1 und ein Verfahren zur Ermittlung einer Kabinenposition einer in einem Aufzugschacht verfahrbaren Aufzugkabine gemäss dem Oberbegriff des Anspruchs 11.

Die EP 1412274 B1 beschreibt ein Positionsbestimmungssystem und ein Verfahren zur Ermittlung einer Kabinenposition einer in einem Aufzugschacht verfahrbaren Aufzugkabine. Das Positionsbestimmungssystem weist ein parallel zu einer Verfahrrichtung neben der Aufzugskabine angebrachtes Codemarkenmuster auf, wobei n aufeinanderfolgende Codemarken des Codemarkenmusters eine Positionsmarke bilden. Die Codemarken bilden dabei magnetische Pole, so dass das Codemarkenmuster aus einer Reihe von magnetischen Nord- und Südpolen aufgebaut ist. Die Positionsmarken sind in einer n-stelligen Pseudozufallsfolge verschiedener Positionsmarken eindeutig angeordnet, wobei die Positionsmarken ein einspuriges Codemarkenmuster bilden. Jeder der genannten Positionsmarke ist über eine Zuordnungstabelle eine diskrete Kabinenposition zugeordnet.

Das Positionsbestimmungssystem verfügt über eine an der Fahrzeugkabine angeordnete erste Erfassungsvorrichtung, welche eine Positionsmarke erfassen kann. Die erste Erfassungsvorrichtung weist dazu eine Reihe von Hall-Sensoren auf, welche das Codemarkenmuster berührungslos abtasten und so die Positionsmarke erfassen. Das Positionsbestimmungssystem verfügt ausserdem über eine erste Auswerteeinheit, welche auf Basis der von der ersten Erfassungsvorrichtung erfassten ersten Positionsmarke eine erste diskrete Kabinenposition bestimmt. Eine erste Interpolationseinrichtung bestimmt eine erste interpolierte Kabinenposition, mittels welcher die erste Auswerteeinheit zusammen mit der ersten diskreten Kabinenposition eine erste Kabinenposition bestimmt, welche durch die Verwendung der ersten interpolierten Kabinenposition genauer ist als die erste diskrete Kabinenposition alleine.

Die erste Interpolationseinrichtung verfügt über insgesamt sechs Hall-Sensoren, mittels welcher sie die Lage der ersten Erfassungsvorrichtung gegenüber dem Codemarkenmuster und damit gegenüber der ersten Positionsmarke in Verfahrrichtung der Aufzugkabine bestimmt. Sie bestimmt daraus die Lage der ersten Erfassungsvorrichtung zwischen zwei aufeinanderfolgenden Positionsmarken als die erste interpolierte Kabinenposition.

Da die Kenntnis der Position der Aufzugkabine im Aufzugschacht für den Betrieb einer Aufzuganlage sicherheitsrelevant ist, ist beim Positionsbestimmungssystem der EP 1412274 B1 die Bestimmung der Kabinenposition vollständig redundant ausgeführt. Das Positionsbestimmungssystem weist damit zusätzlich eine zweite Erfassungsvorrichtung, eine zweite Auswerteeinheit und eine zweite Interpolationseinrichtung auf, welche entsprechend der ersten Erfassungsvorrichtung, der ersten Auswerteeinheit und der ersten Interpolationseinrichtung ausgeführt sind. Die zweite Interpolationseinrichtung weist eigene, also gegenüber den Hall-Sensoren der ersten Interpolationseinrichtung zusätzliche Hall-Sensoren auf.

Demgegenüber ist es insbesondere die Aufgabe der Erfindung, ein Positionsbestimmungssystem und ein Verfahren zur Ermittlung einer Kabinenposition einer Aufzugkabine vorzuschlagen, welche besonders einfach und damit kostengünstig realisiert werden können und gleichzeitig eine ausreichend sichere Bestimmung der Kabinenposition ermöglichen. Erfindungsgemäss wird diese Aufgabe mit einem Positionsbestimmungssystem mit den Merkmalen des Anspruchs 1 und einem Verfahren mit den Merkmalen des Anspruchs 11 gelöst.

Gemäss einem ersten Aspekt der Erfindung verfügt das erfindungsgemässe Positionsbestimmungssystem zur Ermittlung einer Kabinenposition einer in einem Aufzugschacht verfahrbaren Aufzugkabine über im Aufzugschacht angeordnete Positionsmarken, wobei jeder Positionsmarke eine diskrete Kabinenposition zugeordnet ist, eine an der Aufzugkabine angebrachte erste Erfassungsvorrichtung zum Erfassen einer ersten Positionsmarke, eine an der Aufzugkabine angebrachte zweite Erfassungsvorrichtung zum Erfassen einer zweiten Positionsmarke und wenigsten eine Auswerteeinheit. Die Auswerteeinheit bestimmt eine erste diskrete Kabinenposition auf Basis der von der ersten Erfassungsvorrichtung erfassten ersten Positionsmarke und eine zweite diskrete Kabinenposition auf Basis der von der zweiten Erfassungsvorrichtung erfassten zweiten Positionsmarke. Das Positionsbestimmungssystem weist ausserdem eine Interpolationseinrichtung zum Bestimmen einer interpolierten Kabinenposition auf. Die Auswerteeinheit ist dazu vorgesehen, eine erste Kabinenposition auf Basis der ersten diskreten Kabinenposition und einer ersten interpolierten Kabinenposition und eine zweite Kabinenposition auf Basis der zweiten diskreten Kabinenposition und einer zweiten interpolierten Kabinenposition zu bestimmen.

Erfindungsgemäss weist das Positionsbestimmungssystem nur eine einzige Interpolationseinrichtung auf, welche dazu vorgesehen ist, eine oder mehrere Interpolations-Kenngrössen zu erzeugen, welche eine Lage der ersten Erfassungsvorrichtung zur ersten Positionsmarke kennzeichnen. Die Interpolationseinrichtung bestimmt die erste und zweite interpolierte Kabinenposition auf Basis der selben Interpolations-Kenngrösse oder der selben Interpolations-Kenngrössen. Es ist dabei unerheblich, welche der beiden Erfassungsvorrichtungen des Positionsbestimmungssystems als erste und welche als zweite Erfassungsvorrichtung bezeichnet wird.

Die erste Interpolationseinrichtung kann dabei nur eine einzige interpolierte Kabinenposition bestimmen, welche sowohl als erste interpolierte Kabinenposition, als auch als zweite interpolierte Kabinenposition genutzt wird. Alternativ dazu kann die Interpolationseinrichtung auf Basis der selben Interpolations-Kenngrösse oder der selben Interpolations-Kenngrössen die erste interpolierte Kabinenposition getrennt von der zweiten interpolierten Kabinenposition bestimmen. Bei der Bestimmung der ersten und zweiten interpolierten Kabinenposition wird insbesondere die Kenntnis der Anordnung der ersten und zweiten Erfassungsvorrichtung zueinander verwendet.

Damit ist für die Bestimmung der interpolierten Kabinenposition nur eine einzige Interpolations-Kenngrösse und nicht wie beim Positionsbestimmungssystem der EP 1412274 B1 zwei getrennte Interpolations-Kenngrössen notwendig. Damit kommt das erfindungsgemässe Positionsbestimmungssystem gegenüber dem Positionsbestimmungssystem der EP 1412274 B1 mit weniger Sensoren aus. Damit ist das erfindungsgemässe Positionsbestimmungssystem kostengünstig realisierbar. Zusätzlich benötigt das erfindungsgemässe Positionsbestimmungssystem durch die kleine Anzahl an Sensoren nur wenig Bauraum.

Anders ausgedrückt erfolgt damit beim erfindungsgemässen Positionsbestimmungssystem die Bestimmung der diskreten Kabinenpositionen zweikanalig und damit redundant und die Bestimmung der interpolierten Kabinenposition nur einkanalig, also nicht redundant. Die Anmelderin hat erkannt, dass diese Vorgehensweise eine ausreichend sichere Bestimmung der Kabinenposition ermöglicht, da ein Fehler in der Interpolationseinrichtung, beispielsweise durch einen defekten Sensor der Interpolationseinrichtung, nicht zu einem sicherheitskritischen Zustand der Aufzugsanlage führt. Der dabei entstehende Fehler in der Kabinenposition ist immer kleiner als die Auflösung der diskreten Positionsbestimmung, welche üblicherweise im Bereich von einigen Millimetern beispielsweise 4 - 10 mm liegt. Eine derartige Abweichung der bestimmten Kabinenposition von der tatsächlichen Kabinenposition ist nicht sicherheitskritisch. Durch geeignete Massnahmen kann zudem sichergestellt werden, dass ein Fehler in der Interpolationseinrichtung zumindest nach einer gewissen zurückgelegten Wegstrecke erkannt wird.

Ein zweiter Aspekt der Erfindung betrifft eine Aufzuganlage mit einem derartigen Positionsbestimmungssystem.

Die oben genannte Aufgabe wird gemäss einem dritten Aspekt der Erfindung durch ein Verfahren zur Ermittlung einer Kabinenposition einer in einem Aufzugschacht verfahrbaren Aufzugkabine gelöst, bei welchem
- im Aufzugschacht angeordnete Positionsmarken ausgewertet werden, wobei jeder Positionsmarke eine diskrete Kabinenposition zugeordnet ist,
- eine an der Aufzugkabine angebrachte erste Erfassungsvorrichtung eine erste Positionsmarke erfasst,
- eine an der Aufzugkabine angebrachte zweite Erfassungsvorrichtung eine zweite Positionsmarke erfasst,
- eine Auswerteeinheit
   - eine erste diskrete Kabinenposition auf Basis der von der ersten Erfassungsvorrichtung erfassten ersten Positionsmarke und
   - eine zweite diskrete Kabinenposition auf Basis der von der zweiten Erfassungsvorrichtung erfassten zweiten Positionsmarke bestimmt und
- eine Interpolationseinrichtung eine interpolierte Kabinenposition bestimmt.

Die Auswerteeinheit bestimmt eine erste Kabinenposition auf Basis der ersten diskreten Kabinenposition und einer ersten interpolierten Kabinenposition und eine zweite Kabinenposition auf Basis der zweiten diskreten Kabinenposition und einer zweiten interpolierten Kabinenposition. Erfindungsgemäss bestimmt die Interpolationseinrichtung eine Interpolations-Kenngrösse, welche eine Lage der ersten Erfassungsvorrichtung zur ersten Positionsmarke kennzeichnet. Die Interpolationseinrichtung bestimmt dann die erste und die zweite interpolierte Kabinenposition auf Basis der selben Interpolations-Kenngrösse. Bezüglich der Benennung der Erfassungsvorrichtungen und der Bestimmung der ersten und zweiten interpolierten Kabinenpositionen gilt für das erfindungsgemässe Verfahren das selbe wie für das erfindungsgemässe Positionsbestimmungssystem.

Die im Folgenden beschriebenen Ausgestaltungen des Positionsbestimmungssystems gelten auf analoge Weise auch für das Verfahren zur Ermittlung einer Kabinenposition einer in einem Aufzugschacht verfahrbaren Aufzugkabine.

Eine im Aufzugschacht angeordnete Positionsmarke kann beispielsweise als ein aus einzelnen Codemarken bestehendes einspuriges Codemarkenmuster ausgeführt sein, das insbesondere Teil eines parallel zu einer Verfahrrichtung der Aufzugkabine im Aufzugschacht angeordneten Codemarkenbands ist. Die einzelnen Codemarken können beispielsweise durch magnetische Pole gebildet sein. Es ist auch möglich, dass die Codemarken unterschiedliche Dielektrizitätszahlen aufweisen oder eine spezifische Farbe oder Helligkeit, wie beispielsweise weiss und schwarz aufweisen. Verschiedene komplette Positionsmarken können aber auch in Verfahrrichtung untereinander auf einem Positionsmarkenband angeordnet sein, die insbesondere optisch, beispielsweise mittels einer digitalen Kamera ausgewertet werden können. Die Positionsmarken können dann beispielsweise als ein Barcode bzw. Strichcode oder als ein zweidimensionaler Code ausgebildet sein. Darüber hinaus können die Positionsmarken auf weitere Arten realisiert werden.

Die Zuordnung einer Positionsmarke zu einer diskreten Kabinenposition erfolgt insbesondere über eine in der Auswerteeinheit gespeicherte Zuordnungstabelle. Die Zuordnung könnte auch über einen geeigneten Algorithmus erfolgen. Unter einer diskreten Kabinenposition soll hier eine Kabinenposition verstanden werden, die nur auf Grund einer erkannten Positionsmarke und der beschriebenen Zuordnung bestimmt wird. Die Genauigkeit bzw. Auflösung der diskreten Kabinenpositionen hängt dabei hauptsächlich von der Codemarken-Länge der Codemarken ab, wobei die so genannte Codierung des Codebands ebenfalls eine Rolle spielen kann. Die Codemarken-Länge kann beispielsweise zwischen 4 und 20 mm betragen, so dass die Genauigkeit bzw. Auflösung ebenfalls zwischen 4 und 20 mm beträgt. Bei einer unten beschriebenen Manchester-Codierung des Codebands beträgt die Genauigkeit bzw. Auflösung die doppelte Codemarken-Länge.

Die Erfassungsvorrichtungen weisen zur Erfassung der Positionsmarken jeweils wenigstens einen Sensor, insbesondere mehrere Sensoren auf. Dabei wird auch eine digitale Kamera als ein Sensor angesehen. Die Art des oder der Sensoren ist dabei auf die Ausführung der Positionsmarken abgestimmt, die Sensoren können beispielsweise als Hall-Sensoren, kapazitive Effekte erfassenden Sensoren, optische Sensoren oder als eine digitale Kamera ausgeführt sein. Um die beschriebene zweikanalige Bestimmung der diskreten Kabinenposition zu gewährleisten, weist jede Erfassungsvorrichtung eigene Sensoren auf und es wird zur Bestimmung der ersten diskreten Kabinenposition keine Information der zweiten Erfassungsvorrichtung ausgewertet und umgekehrt. Dies schliesst aber nicht aus, dass die beiden Erfassungsvorrichtungen nicht in einem Bauteil intergiert sein können. Die beiden Erfassungsvorrichtungen weisen insbesondere ein gemeinsames Gehäuse auf.

Die beiden Erfassungsvorrichtungen können zur gleichen Zeit entweder die gleiche Positionsmarke oder zwei unterschiedliche Positionsmarken erfassen. Bei der Erfassung der selben Positionsmarke erfolgt die Zuordnung einer Positionsmarke zu einer diskreten Kabinenposition über die selbe Zuordnungstabelle, bei der Erfassung zweier unterschiedlicher Positionsmarken insbesondere über zwei verschiedene Zuordnungstabellen. Es wird insbesondere bei jeder Bestimmung einer ersten und zweiten diskreten Kabinenposition überwacht, ob die beiden diskreten Kabinenpositionen gleich sind. Ist dies nicht der Fall, wird ein Fehler erkannt und die Aufzugsanlage insbesondere sofort angehalten.

Das Positionsbestimmungssystem weist insbesondere zwei getrennte Auswerteeinheiten auf, eine erste Auswerteeinheit für die Bestimmung der ersten diskreten Kabinenposition und eine zweite Auswerteeinheit für die Bestimmung der zweiten diskreten Kabinenposition. Damit lässt sich die zweikanalige Bestimmung der diskreten Kabinenposition besonders einfach umsetzen. Es ist auch möglich, dass das Positionsbestimmungssystem nur eine einzige Auswerteeinheit aufweist, beispielsweise basierend auf einem fehlertoleranten Computersystem, welches eine parallele Bearbeitung von Rechenoperationen ermöglicht. Das genannte fehlertolerante Computersystem kann beispielsweise als ein so genanntes Lockstep System ausgeführt sein.

Die Interpolationseinrichtung erzeugt als eine oder mehrere Interpolations-Kenngrössen, die als Basis für die Bestimmung der wenigstens einen interpolierten Kabinenposition dienen, insbesondere ein oder mehrere Sensorsignale aus denen die Lage der ersten Erfassungsvorrichtung zur ersten Positionsmarke ableitbar ist. Aus dieser Lage kann eine interpolierte Kabinenposition bestimmt werden, welche als erste und zweite interpolierte Kabinenposition verwendet werden kann. Die interpolierte Kabinenposition gibt insbesondere an, um wie viel die Kabinenposition ausgehend von der bestimmten diskreten Kabinenposition in Richtung der in Verfahrrichtung liegenden nächsten diskreten Kabinenposition verschoben ist. Die interpolierte Kabinenposition kann dazu in Prozent mit einem Wertebereich von Null bis knapp unter 100 Prozent oder als eine Strecke mit einem Wertebereich zwischen 0 und knapp unter der Auflösung der diskreten Kabinenposition ausgeführt sein. Der minimale Wert von null gibt dabei an, dass die Kabinenposition genau der bestimmten diskreten Kabinenposition entspricht und der maximale Wert gibt an, dass die Kabinenposition ganz knapp vor der nächsten diskreten Kabinenposition in Verfahrrichtung liegt.

Da die Anordnung der zweiten Erfassungsvorrichtung gegenüber der ersten Erfassungsvorrichtung und die Anordnung der zweiten Positionsmarke zur ersten Positionsmarke bekannt ist, kann aus der Lage der der ersten Erfassungsvorrichtung zur ersten Positionsmarke auch die Lage der zweiten Erfassungsvorrichtung zur zweiten Positionsmarke bestimmt werden. Damit kann aus der Lage der ersten Erfassungsvorrichtung zur ersten Positionsmarke die erste interpolierte Kabinenposition und aus der Lage der zweiten Erfassungsvorrichtung zur zweiten Positionsmarke die zweite interpolierte Kabinenposition bestimmt werden.

Die eine einzige Interpolationseinrichtung kann dazu über einen oder mehrere Hall-Sensoren verfügen. Die Sensoren der Interpolationseinrichtung können auch gleichzeitig als Sensoren der ersten oder zweiten Erfassungsvorrichtung dienen. Ein Sensor kann also gleichzeitig Teil der ersten oder zweiten Erfassungsvorrichtung und der Interpolationseinrichtung sein. Die Interpolations-Kenngrösse kann auch als die Lage der Positionsmarke in Fahrrichtung in einem von einer Kamera aufgenommenen Bild ausgeführt sein. In diesem Fall benötigt die Interpolationseinrichtung keine eigenen Sensoren. In diesem Fall leitet sie die Interpolations-Kenngrösse aus dem von der ersten oder zweiten Erfassungsvorrichtung aufgenommenen Kamerabild ab.

Die eine einzige Auswerteeinheit oder die erste und zweite Auswerteeinheit bestimmen die erste bzw. zweite Kabinenposition auf Basis der ersten bzw. zweiten diskreten Kabinenposition und der ersten bzw. zweiten interpolierten Kabinenposition. Die Vorgehensweise hängt dabei davon ab, wie die interpolierte Kabinenposition ausgestaltet ist. Wenn die interpolierte Kabinenposition beispielsweise eine Strecke angibt, so ergibt sich die Kabinenposition aus der Summe der diskreten und der interpolierten Kabinenposition. Wenn die interpolierte Kabinenposition beispielsweise wie beschrieben eine relative Angabe in Prozent ist, so ergibt sich die Kabinenposition aus der Summe der diskreten Kabinenposition und dem Produkt der interpolierten Kabinenposition mit der Auflösung der diskreten Kabinenposition. Darüber hinaus können weitere Einflussgrössen, wie beispielsweise das Ergebnis einer so genannten Feininterpolation bei der Bestimmung der Kabinenposition berücksichtigt werden.

Die Kabinenposition der Aufzugkabine im Aufzugschacht wird von einer Aufzugsteuerung der Aufzuganlage benötigt, um die Aufzugkabine sicher und genau innerhalb des Aufzugschachts verfahren und positionieren zu können. Mittels einer zeitlichen Betrachtung des Verlaufs der Position in Fahrtrichtung kann die Geschwindigkeit und ggf. auch die Beschleunigung der Aufzugkabine bestimmt werden. Diese Grössen werden insbesondere ebenfalls von der Aufzugsteuerung verwendet. Die Geschwindigkeit und/oder die Beschleunigung der Aufzugkabine können insbesondere von der ersten und/oder zweiten Auswerteeinheit, aber auch von der Aufzugsteuerung bestimmt werden.

Das Positionsbestimmungssystem übermittelt dazu die Kabinenposition und ggf. die Geschwindigkeit und Beschleunigung der Aufzugkabine über eine Kommunikationsverbindung an die Aufzugsteuerung. Es ist dabei möglich, dass die erste und zweite Kabinenposition an die Aufzugsteuerung übermittelt werden. Alternativ dazu kann nur eine Kabinenposition an die Aufzugsteuerung übermittelt werden, wobei entweder die erste oder die zweite Kabinenposition oder eine Kombination daraus, beispielsweise der Mittelwert der beiden Kabinenpositionen an die Aufzugsteuerung übermittelt werden kann.

In Ausgestaltung der Erfindung weist die Interpolationseinrichtung eine einzige Interpolationserfassungsvorrichtung zur Erzeugung der genannten Interpolations-Kenngrösse, eine erste Interpolationsauswerteeinheit zur Bestimmung der ersten interpolierten Kabinenposition und eine zweite Interpolationsauswerteeinheit zur Bestimmung der zweiten interpolierten Kabinenposition auf.

Die von der Interpolationserfassungsvorrichtung erzeugte Interpolations-Kenngrösse wird damit von beiden Interpolationsauswerteeinheiten insbesondere unabhängig voneinander weiterverarbeitet. Dies ist insbesondere dann vorteilhaft, wenn das Positionsbestimmungssystem eine erste und eine zweite Auswerteeinheit aufweisen. Würde die Interpolationsvorrichtung in diesem Fall nur eine Interpolationsauswerteeinheit aufweisen, wäre eine aufwändige Synchronisation der beiden Auswerteeinheiten und der Interpolationsauswerteeinheit notwendig.

Die erste bzw. zweite Interpolationsauswerteeinheit sind insbesondere in die erste bzw. zweite Auswerteeinheit integriert. Sie können aber auch als selbständige Einheiten, beispielsweise jeweils als ein Mikrocontroller ausgeführt sein.

Die eine einzige Interpolationserfassungsvorrichtung weist einen oder mehrere Sensoren beispielsweise in Form von Hall-Sensoren auf, die insbesondere ein analoges Sensorsignal ausgeben. Ein derartiges Sensorsignal kann als Interpolations-Kenngrösse im Sinne des Anspruchs 1 angesehen werden. Wenn die Interpolationsauswerteeinheiten auf einem Mikrocontroller realisiert sind, müssen die analogen Sensorsignale mittels Analog-Digitalwandlern in ein digitales Signal umgewandelt werden. In diesem Fall weist die Interpolationseinrichtung insbesondere zwei Analog-Digitalwandler auf, wobei jeweils ein Analog-Digitalwandler einer Interpolationsauswerteeinheit zugeordnet ist. Dies ermöglicht eine einfache Synchronisation der Interpolationsauswerteeinheiten und der beiden Analog-Digitalwandlern.

In Ausgestaltung der Erfindung ist die Interpolationseinrichtung dazu vorgesehen, nur eine einzige interpolierte Kabinenposition zu bestimmen, welche als erste und zweite interpolierte Kabinenposition genutzt wird. Die Interpolationseinrichtung kann dabei Teil der ersten oder zweiten Auswerteeinheit sein. Es ist also nur eine einzige Interpolationseinrichtung vorhanden, die beide Auswerteeinheiten mit der für die Bestimmung der Kabinenposition notwendigen interpolierten Kabinenposition versorgt. Damit ist für die Bestimmung der Kabinenposition vergleichsweise wenig Rechenkapazität notwendig, was eine kostengünstige Realisierung des Positionsbestimmungssystems ermöglicht. Diese Ausgestaltung ist insbesondere dann vorteilhaft, wenn die Positionsmarken optisch erkannt werden. In diesem Fall benötigt die Interpolationseinrichtung keine eigenen Sensoren, sondern wertet nur das von einer der beiden Erfassungsvorrichtungen erfasste Bild aus.

In Ausgestaltung der Erfindung weist die Interpolationseinrichtung mehrere Sensoren auf, wobei jeder der Sensoren der Interpolationseinrichtung gleichzeitig auch Teil der ersten oder zweiten Erfassungsvorrichtung ist. Es werden damit alle Sensoren der Interpolationseinrichtung doppelt genutzt, was eine geringe Anzahl von Sensoren notwendig macht. Das Positionsbestimmungssystem ist damit besonders kostengünstig und benötigt besonders wenig Bauraum. Ausserdem kann in diesem Fall ein Fehler jedes Sensors der Interpolationseinrichtung sehr einfach erkannt werden. Dies ergibt sich daraus, dass ein Fehler eines Sensors der ersten oder zweiten Erfassungsvorrichtung sehr einfach durch einen Vergleich der ersten und zweiten diskreten Kabinenposition erkannt werden kann. Eine Fehlererkennung eines Sensors, der nur von der Interpolationseinrichtung genutzt wird, wäre im Vergleich dazu viel aufwändiger.

In Ausgestaltung der Erfindung weist das Positionsbestimmungssystem ein parallel zu einer Verfahrrichtung neben der Aufzugskabine angebrachtes Codemarkenmuster auf, wobei n aufeinanderfolgende Codemarken des Codemarkenmusters eine Positionsmarke bilden. Die Positionsmarken sind in einer n-stelligen Pseudozufallsfolge verschiedener Positionsmarken eindeutig angeordnet und die Positionsmarken bilden ein einspuriges Codemarkenmuster. Die erste und zweite Erfassungsvorrichtung sind dazu vorgesehen, zur Erfassung der ersten Positionsmarke das Codemarkenmuster berührungslos abzutasten. Damit ist eine besonders genaue Bestimmung der Kabinenposition möglich.

Die Codemarkenmuster sind insbesondere in Manchester-Codierung codiert. Damit wird sichergestellt, dass nach spätestens zwei aufeinanderfolgenden Codemarken ein Wechsel des Werts der Codemarke stattfindet. Ein derartiger Wechsel kann für die Erzeugung der für die Bestimmung der interpolierten Kabinenposition verwendeten Interpolations-Kenngrösse genutzt werden, welche die Lage der ersten Erfassungsvorrichtung zur ersten Positionsmarke und damit auch indirekt die Lage der zweiten Erfassungsvorrichtung zur zweiten Positionsmarke kennzeichnet. Damit ermöglicht die Manchester-Codierung eine besonders genaue Bestimmung der interpolierten Kabinenposition.

Die Codemarken bilden insbesondere magnetische Pole und die Erfassungsvorrichtungen und die Interpolationseinrichtung weisen insbesondere Hallsensoren auf. Damit ist die Umsetzung des Positionsbestimmungssystems besonders kostengünstig.

Das Codemarkenmuster ist insbesondere wie das Codemarkenmuster der EP 1412274 B1 codiert und ausgeführt.

In Ausgestaltung der Erfindung weist die Interpolationseinrichtung mehrere Sensoren zum Erfassen von Codemarkenübergängen auf, welche in Verfahrrichtung über einen Bereich mit einer Länge grösser als die Länge (2λ) zweier Codemarken in einem Abstand kleiner als die Länge einer Codemarke (λ) angeordnet sind. Damit ist eine besonders genaue Bestimmung der interpolierten Kabinenposition möglich.

Die Interpolationseinrichtung weist insbesondere 6 Sensoren zum Erfassen von Codemarkenübergängen auf. Die Länge einer Codemarke (λ) kann beispielsweise zwischen 2 und 12 mm, insbesondere 4 oder 8 mm betragen.

Die Sensoren der Interpolationseinrichtung sind insbesondere analog den Sensoren der Interpolationseinrichtung der EP 1412274 B1 ausgeführt und angeordnet.

In Ausgestaltung der Erfindung ist die Auswerteeinheit dazu vorgesehen, ein Fehlersignal auszugeben, wenn die erste und zweite diskrete Kabinenposition voneinander abweichen. Damit kann ein Fehler in der Bestimmung der Kabinenposition sehr schnell und einfach erkannt werden, was einen sicheren Betrieb der Aufzuganlage ermöglicht.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: eine schematische Darstellung einer Aufzuganlage mit einem Positionsbestimmungssystem zur Ermittlung einer Kabinenposition einer in einem Aufzugschacht verfahrbaren Aufzugkabine,
- Fig. 2: eine schematische Darstellung eines Positionsbestimmungssystems,
- Fig. 3: einen Verlauf eines Ausgangssignals einer Interpolationseinrichtung des Positionsbestimmungssystems,
- Fig. 4: eine schematische Darstellung eines alternativen Ausführungsbeispiels eines Positionsbestimmungssystems und
- Fig. 5: eine Positionsmarke des Positionsbestimmungssystems aus Fig. 4.

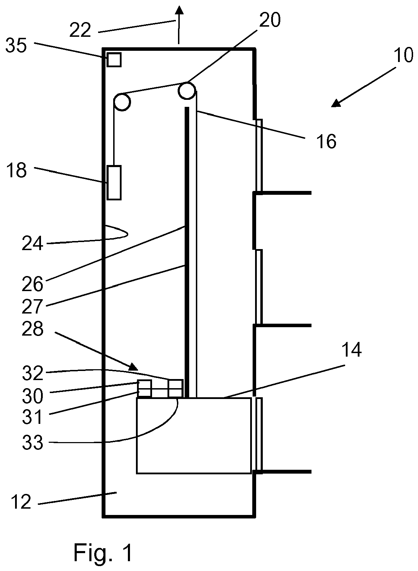

Gemäss Fig. 1 verfügt eine Aufzuganlage 10 über einen in vertikaler Richtung ausgerichteten Aufzugschacht 12. Innerhalb des Aufzugschachts 12 ist eine Aufzugkabine 14 angeordnet, welche über ein Tragmittel 16 in Form eines flexiblen Bands oder eines Seils mit einem Gegengewicht 18 auf bekannte Weise verbunden ist. Das Tragmittel 16 verläuft ausgehend von der Aufzugkabine 14 über eine Antriebsscheibe 20, welche von einer nicht dargestellten Antriebsmaschine angetrieben werden kann. Mittels der Antriebsmaschine und dem Tragmittel 16 kann die Aufzugkabine 14 im Aufzugschacht 12 auf und ab verfahren werden. Die Aufzugkabine 14 kann damit in oder entgegen einer Verfahrrichtung 22, welche in vertikaler Richtung nach oben verläuft, im Aufzugschacht 12 verfahren werden.

An einer Schachtwand 24 des Aufzugschachts 12 ist eine Führungsschiene 26 fixiert, die in Verfahrrichtung 22 verläuft. Beim Verfahren der Aufzugkabine 14 wird diese über nicht dargestellte Führungsschuhe entlang der Führungsschiene 26 geführt.

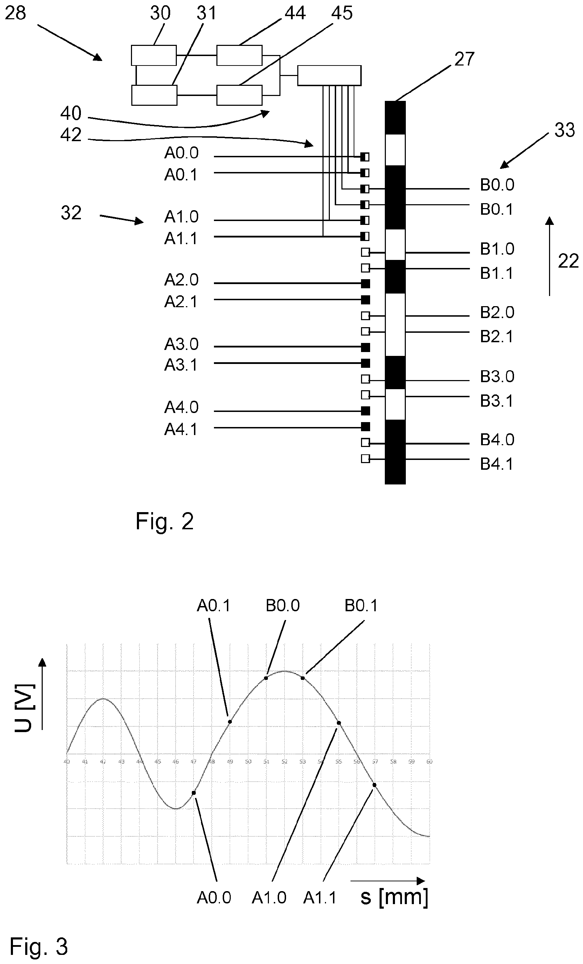

An der Führungsschiene 26 ist ein Codeband 27 in Form eines Magnetbands angeordnet, das in Fig. 2 detaillierter dargestellt ist und in Zusammenhang mit der Fig. 2 näher beschrieben wird. Das Codeband 27 dient als Träger für ein einspuriges kombiniertes Codemarkenmuster, das den numerischen Code von absoluten Positionen der Aufzugkabine 14 im Schacht 12 bezogen auf einen Nullpunkt darstellt. Das Codeband könnte auch unabhängig von einer Führungsschiene im Aufzugschacht angeordnet sein.

Auf der Aufzugkabine 14 sind Teile eines Positionsbestimmungssystem 28 zur Ermittlung einer Kabinenposition der Aufzugkabine 14 angeordnet. Das Positionsbestimmungssystem 28 verfügt über eine erste Auswerteeinheit 30, eine zweite Auswerteeinheit 31, eine erste Erfassungsvorrichtung 32 und eine zweite Erfassungsvorrichtung 33, die alle auf der Aufzugkabine 14 angeordnet sind. Das Positionsbestimmungssystem 28 umfasst ausserdem das Codeband 27 und ist in Fig. 2 detaillierter dargestellt und wird in Zusammenhang mit der Fig. 2 näher beschrieben.

Die erste Erfassungsvorrichtung 32 und die zweite Erfassungsvorrichtung 33 sind so an der Aufzugkabine angeordnet, dass sie vom Codeband 27 gebildete Positionsmarken erfassen können. Damit kann das Positionsbestimmungssystem 28 die Kabinenposition der Aufzugkabine 14 bestimmen und über eine nicht dargestellte Kommunikationsverbindung an eine im Aufzugschacht 12 angeordnete Aufzugsteuerung 35 übermitteln, welche die Kabinenposition der Aufzugkabine 14 für die Steuerung der Aufzuganlage 10 verwendet.

Fig. 2 zeigt schematisch das Positionsbestimmungssystem 28 mit einem Teil des Codebands 27. Das Codeband 27 weist ein einspuriges kombiniertes Codemarkenmuster auf. Die einzelnen Codemarken sind durch in Längsrichtung des Codebands 27 in einer Spur angeordnete gleichlange rechteckige Abschnitte mit einer Länge von jeweils λ=4 mm symbolisiert und entweder als magnetischer Nordpol (weisses Rechteck) oder als magnetischer Südpol (schwarzes Rechteck) magnetisiert. Die einzelnen Nordpole und Südpole bilden nach aussen entsprechend orientierte Magnetfelder aus. Eine Codemarke wird hier auch als ein Bit bezeichnet. Die Codierung des Codebands 27 ist aufgebaut aus einer so genannten binären Pseudozufallsfolge. Eine Pseudozufallsfolge besteht aus lückenlos hintereinander angeordneten Bitsequenzen mit b binären Stellen. Bei jedem Weiterrücken um ein Bit in der binären Pseudozufallsfolge, stellt sich dann bekanntlich jeweils eine neue b-stellige binäre Bitsequenz ein. Eine solche Sequenz b hintereinander liegender Bits ist nachfolgend als Codewort bezeichnet.

Dem in der Fig. 2 dargestellten Beispiel des Codebands 27 liegt eine Pseudozufallsfolge aus Codeworten mit b=4 Stellen zu Grunde. Die Anzahl der Stellen kann auch deutlich höher sein, beispielsweise b=14 oder 16. In Verfahrrichtung 22 der beschriebenen Pseudozufallsfolge ist nach jedem Bit mit Wertigkeit "0" ein Bit mit der Wertigkeit "1" und nach jedem "1 "-Bit ein "0"-Bit eingefügt. Folglich findet in dem einspurigen kombinierten Codemarkenmuster spätestens nach zwei Bits ein Bitwechsel statt. Diese Art der Codierung ist als sogenannte Manchester-Codierung bekannt. Auf dem Codeband 27 zeigt sich dies gemäss Fig. 2 dadurch, dass nur Magnetpole in der Länge L=λ=4 mm und der doppelten Länge von L=2λ=8 mm vorhanden sind und dass längstens nach L=2λ=8 mm ein Übergang von einem Nordpol auf einen Südpol oder umgekehrt auftritt. Durch die beschriebene Verdopplung der Bits wird bei gleichzeitiger Abtastung von jeweils b+1=5 aufeinanderfolgenden der jeweils zweiten Bits des kombinierten Codemarkenmusters ein eindeutiges 5-stelliges Ablesemuster ohne Wiederholung von Codeworten ausgelesen. Ein derartiges 5-stelliges Ablesemuster stellt damit eine im Aufzugschacht 12 angeordnete Positionsmarke dar. Die Positionsmarke 51 setzt sich damit aus insgesamt zehn, d.h. n=10 aufeinander folgenden Codemarken 50 zusammen und weist eine Positionsmarken-Länge L_{P} von 10 ^{∗} λ = 40 mm auf.

Dementsprechend umfasst die erste Erfassungsvorrichtung 32 zum Lesen der fünf Bit Positionsmarken fünf Sensorpaare (A0.0, A0.1; A1.0, A1.1; A2.0; A2.1; A3.0, A3.1; A4.0, A4.1). Die Sensorpaare (Ax.0, Ax.1) der ersten Erfassungsvorrichtung 32 sind in Verfahrrichtung 22 auf einer Linie mit einem Abstand angeordnet, der der Länge 2λ=8 mm zweier Magnetpole entspricht. Die beiden Sensoren Ax.0 und Ax.1 jedes der Sensorpaare (Ax.0, Ax.1) trennt ein gegenseitiger Abstand der Grösse einer halben Codemarkenlänge λ/2=2 mm. Steht einer der beiden Sensoren Ax.0, Ax.1 in der Nähe eines Magnetpolwechsels und liefert eine Sensorspannung von annähernd dem Wert Null, dann befindet sich der jeweils andere Sensor Ax.0 oder Ax.1 mit Sicherheit in Abdeckung zu einem der Magnetpole und liefert eine sichere Information. Alle fünf ersten Sensoren Ax.0 sind zu einer ersten Gruppe und alle fünf zweiten Sensoren Ax.1 sind zu einer zweiten Sensorgruppe zusammengefasst. Von den Sensoren Ax.0 der ersten Sensorgruppe und der um die halbe Codemarkenlänge λ/2=2 mm in Verfahrrichtung 22 versetzten Sensoren Ax.1 der zweiten Sensorgruppe, werden alternierend immer nur die Ausgangssignale der Sensoren einer von beiden Sensorgruppen zur Positionsablesung ausgewählt und ausgewertet. Eine erfasste Signalmarke setzt sich also aus fünf gleichzeitig gelesenen Bits zusammen, wobei aber nur jedes zweite Bit des kombinierten Codemarkenmusters gelesen wird.

Die in beschriebener Weise von der ersten Erfassungsvorrichtung 32 gleichzeitig abgelesenen fünf Bits einer Positionsmarke werden von der ersten Auswerteeinheit 30 gemeinsam als ein fünfstelliges Codewort interpretiert. Jedem dieser fünfstelligen Codeworte des kombinierten Codemarkenmusters ist über eine in einem Speicher der ersten Auswerteeinheit 30 eine Zuordnungstabelle eine erste diskrete Kabinenposition der Aufzugskabine 14 zugeordnet. Die Auflösung der diskreten Kabinenposition ist hier 8 mm was der doppelten Länge λ einer Codemarke entspricht.

Die zweite Erfassungsvorrichtung 33 weist zum Lesen der fünf Bit Positionsmarken ebenfalls fünf Sensorpaare (B0.0, B0.1; B1.0, B1.1; B2.0; B2.1; B3.0, B3.1; B4.0, B4.1) auf. Die fünf Sensorpaare (Bx.0, Bx.1) sind ebenfalls in einer Reihe analog den fünf Sensorpaaren (Ax.0, Ax.1) der ersten Erfassungsvorrichtung 32 angeordnet. Die fünf Sensorpaare (Bx.0, Bx.1) der ersten Auswerteeinheit 32 sind jeweils um eine Codemarkenlänge λ=4 mm gegenüber den fünf Sensorpaaren (Ax.0, Ax.1) der ersten Erfassungsvorrichtung 32 in Verfahrrichtung 22 verschoben, so dass sie ineinander greifen. Es wechseln sich in Verfahrrichtung 22 also immer ein Sensorpaar (Ax.0, Ax.1) der ersten Erfassungsvorrichtung 32 und ein Sensorpaar (Bx.0, Bx.1) der zweiten Erfassungsvorrichtung 33 ab. Damit ist auch die Lage der zweiten Erfassungsvorrichtung 33 gegenüber der ersten Erfassungsvorrichtung 32 bekannt.

Die zweite Auswerteeinheit 33 bestimmt analog zur ersten Auswerteeinheit 32 eine zweite diskrete Kabinenposition. Die Bestimmung der ersten und zweiten Kabinenposition erfolgt also unabhängig voneinander, also zweikanalig bzw. redundant.

Die oben beschriebene Umschaltung auf die jeweils richtige der beiden Sensorgruppen der ersten bzw. zweiten Erfassungsvorrichtung 32, 33 erfolgt über eine Bestimmung der Lage des Polübergangs zwischen einem Südpol und einem Nordpol mit Hilfe einer Interpolationseinrichtung 40. Die Interpolationseinrichtung 40 verfügt über eine einzige Interpolationserfassungsvorrichtung 42, welche die Sensorpaare A0.0, A0.1; B0.0, B0.1 und A1.0, A1.1 umfasst, welche also sowohl Teil der Interpolationserfassungsvorrichtung 42 als auch der ersten bzw. zweiten Erfassungsvorrichtung 32, 33 sind. Die Interpolationserfassungsvorrichtung 42 umfasst damit insgesamt sechs Sensoren in Form von Hall-Sensoren, die alle gleichzeitig auch Teil der ersten oder zweiten Erfassungsvorrichtung 32, 33 sind.

Die Sensoren (A0.0, A0.1; B0.0, B0.1, A1.0, A1.1) der Interpolationserfassungsvorrichtung 42 sind damit jeweils in einem Abstand von λ/2=2 mm zueinander angeordnet. Der Abstand des ersten Sensors A0.0 zum letzten Sensor A1.1 beträgt 10 mm und damit mehr als die Länge zweier Codemarken 2λ=8 mm. In dem Bereich zwischen dem ersten Sensor A0.0 und dem letzten Sensor A1.1 der Interpolationserfassungsvorrichtung 42 liegt zwingend eine Nullstelle, d.h. ein Polübergang des oben beschriebenen kombinierten Codemarkenmusters. Die Interpolationseinrichtung 40 detektiert die quasi äquidistanten Polübergänge bzw. Nulldurchgänge des Magnetfelds zwischen zwei aufeinanderfolgenden Nordpolen oder Südpolen.

In Fig. 3 ist ein Beispiel der Ausgangsspannungen der sechs Sensoren A0.0, A0.1, B0.0, B0.1, A1.0, A1.1 der Interpolationserfassungsvorrichtung 42 über dem Weg in Verfahrrichtung 22 im Millimeterabständen dargestellt. Die Ausgangsspannungen der sechs Sensoren A0.0, A0.1, B0.0, B0.1, A1.0, A1.1 sind damit Interpolations-Kenngrössen, welche eine Lage der ersten Erfassungsvorrichtung 32 zur ersten Positionsmarke und damit auch indirekt eine Lage der zweiten Erfassungsvorrichtung 33 zur zweiten Positionsmarke kennzeichnen. Die Spannungen der einzelner Sensoren A0.0, A0.1, B0.0, B0.1, A1.0, A1.1 werden folgendermassen ausgewertet, wobei die Ziffer jeweils das Ergebnis der genannten Abfrage widergibt (0=> falsch, 1=> richtig):

| | | |
|---|---|---|
| | U (A0.0) > 0 | => 0 |
| | U (A0.0) + 1/3 U(A0.1) > 0 | => 0 |
| | U (A0.0) + U(A0.1) > 0 | => 1 |
| | 1/3 U (A0.0) + U(A0.1) > 0 | => 1 |
| | U(A0.1) > 0 | => 1 |
| usw. | | |
| | U (B0.1) + 1/3 U(A1.1) > 0 | => 1 |

Dies ergibt für das in Fig. 3 dargestellte Beispiel die Ziffernfolge: 001111111111111111. Damit ist ausgedrückt, dass sich an dem ersten Interpolationssensor A0.0 bis 0.5 mm dahinter ein Südpol erstreckt. Ab 1.0 mm bis 9 mm hinter dem ersten Interpolationssensor A0.0 befindet sich ein Nordpol.

Die erzeugte Ziffernfolge wird über eine in der Interpolationseinrichtung 40 gespeicherte Tabelle in eine dreistellige binäre Zahlenfolge decodiert, die in dem dargestellten Beispiel eine interpolierte Kabinenposition von 3 mm darstellt. Diese ist mit der Codemarkenlänge λ periodisch und gibt die Polarität des Bandes von der Stelle des ersten Hallsensors A0.0 an gerechnet schrittweise in beispielsweise 0.5 mm Schritten an. Das höchstwertige Bit dieser interpolierten Kabinenposition invertiert in einem Abstand von 2 mm und übernimmt als Abtastsignal die zur beschriebenen Umschaltung zwischen den Sensorgruppen der Erfassungsvorrichtung 32, 33. Die so ermittelte interpolierte Kabinenposition wird zur jeweiligen diskreten Kabinenposition addiert.
Die beschriebene Auswertung der Ausgangsspannungen der sechs Sensoren A0.0, A0.1, B0.0, B0.1, A1.0, A1.1 wird jeweils getrennt in einer ersten Interpolationsauswerteeinheit 44 und in einer zweiten Interpolationsauswerteeinheit 45 durchgeführt. Die erste Interpolationsauswerteeinheit 44 bestimmt also eine erste interpolierte Kabinenposition und die zweite Interpolationsauswerteeinheit 45 eine zweite interpolierte Kabinenposition. Als Basis dienen in beiden Fällen die Ausgangsspannungen der sechs Sensoren A0.0, A0.1, B0.0, B0.1, A1.0, A1.1, also dieselben Interpolations-Kenngrössen, welche eine Lage der ersten Erfassungsvorrichtung 32 zur ersten Positionsmarke und damit auch indirekt eine Lage der zweiten Erfassungsvorrichtung 33 zur zweiten Positionsmarke kennzeichnen.

Die erste Auswerteeinheit 30 addiert die erste interpolierte Kabinenposition zur ersten diskreten Kabinenposition und bestimmt so eine erste Kabinenposition. Analog dazu addiert die zweite Auswerteeinheit 31 die zweite interpolierte Kabinenposition zur zweiten diskreten Kabinenposition und bestimmt so eine zweite Kabinenposition. Die erste Auswerteeinheit 30 bildet einen Mittelwert der ersten und zweiten Kabinenposition und übermittelt diesen als die Kabinenposition der Aufzugkabine an die Aufzugsteuerung 35.

Die beiden Auswerteeinheiten 30, 31 vergleichen ausserdem laufend die erste und zweite diskrete Kabinenposition. Wenn eine der beiden Auswerteeinheiten 30, 31 feststellt, dass die beiden diskreten Kabinenpositionen voneinander abweichen, erzeugt sie sofort ein Fehlersignal, in Folgen dessen die Aufzuganalage 10 sofort angehalten wird.

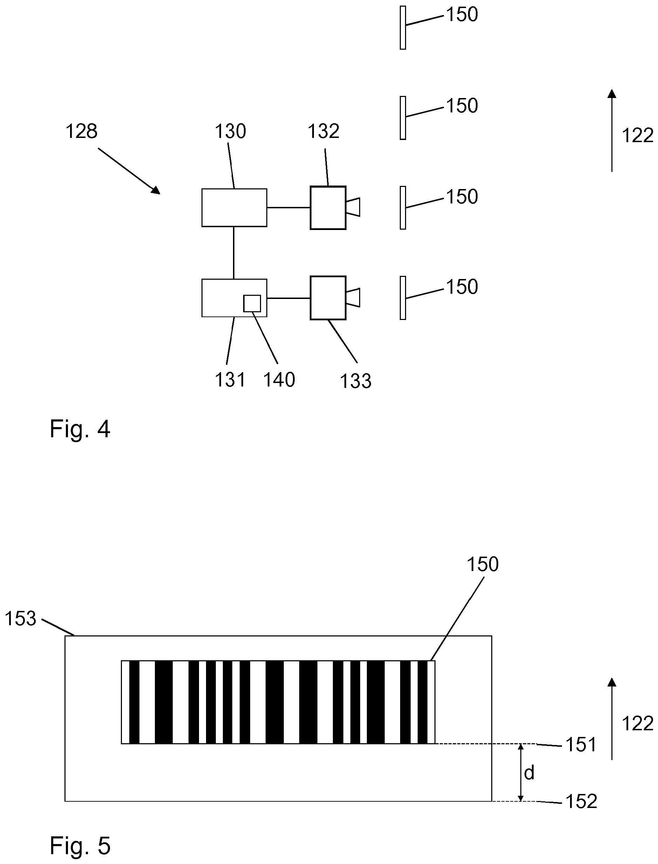

Gemäss Fig. 4 weist ein alternatives Positionsbestimmungssystem 128 Positionsmarken 150 auf, die von einem ersten Erfassungsvorrichtung 132 in Form einer ersten Kamera und einer zweiten ersten Erfassungsvorrichtung 133 in Form einer zweiten Kamera 133 erfasst werden. Die Positionsmarken 150 sind untereinander im Aufzugschacht beispielsweise an einer Schachtwand angeordnet.

Die Positionsmarken 150 sind dabei jeweils als ein Barcode ausgeführt. In Fig. 5 ist ein Beispiel einer Positionsmarke 150 dargestellt. Der Barcode stellt insbesondere eine Zahlenfolge dar, die von einer ersten bzw. zweiten Auswerteeinheit 130, 131 aus den von den Kameras 132, 133 erfassten Bildern ausgelesen wird. Über eine in der ersten bzw. zweiten Auswerteeinheit 130, 131 gespeicherten Zuordnungstabelle wird von der ersten bzw. zweiten Auswerteeinheit 130, 131 aus der Zahlenfolge jeweils eine diskrete Kabinenposition bestimmt. Im Aufzugschacht sind in regelmässigen Abständen von beispielsweise 10 mm untereinander derartige Positionsmarken angeordnet, wobei jede Positionsmarke eine andere Zahlenfolge darstellt. Die Positionsmarke könnte auch aus einem optisch erfassbaren zweidimensionaler Code bestehen.

Die zweite Auswerteeinheit 131 weist zusätzlich eine Interpolationseinrichtung 140 auf, die eine interpolierte Kabinenposition bestimmt. Die Interpolationseinrichtung 140 bestimmt dazu einen Abstand d zwischen einem unteren Rand 151 der Positionsmarke 150 und einem unteren Rand 152 des von der Kamera 133 aufgenommenen Bilds 153. Der Abstand d gibt an, wie weit die Kamera 133 gegenüber der Positionsmarke 150 in Verfahrrichtung 122 verschoben ist. Er ist damit eine Interpolations-Kenngrösse, welche die Lage der zweiten Erfassungsvorrichtung 133 zur zweiten Positionsmarke 150 kennzeichnet. Der Abstand d kann als zweite interpolierte Kabinenposition verwendet werden. Die zweite Kabinenposition ergibt sich dann aus der zweiten diskreten Kabinenposition und der zweiten interpolierten Kabinenposition.

Die zweite Auswerteeinheit 131 übermittelt die zweite interpolierte Kabinenposition als erste interpolierte Kabinenposition an die erste Auswerteeinheit 130, welche aus der ersten diskreten Kabinenposition und der ersten interpolierten Kabinenposition die erste Kabinenposition bestimmt.

Die Interpolationseinrichtung bestimmt also nur eine einzige interpolierte Kabinenposition, die von der ersten Auswerteeinheit 130 als erste interpolierte Kabinenposition und von der zweiten Auswerteeinheit 131 als zweite interpolierte Kabinenposition verwendet wird.

Das Positionsbestimmungssystem 128 übermittelt die Kabinenposition ebenfalls an eine in der Fig. 4 nicht dargestellte Aufzugsteuerung und weist auch analog zum Positionsbestimmungssystem 28 eine Fehlerüberwachung auf.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Positionsbestimmungssystem zur Ermittlung einer Kabinenposition einer in einem Aufzugschacht (12) verfahrbaren Aufzugkabine (14) mit
- im Aufzugschacht (12) angeordneten Positionsmarken (150), wobei jeder Positionsmarke (150) eine diskrete Kabinenposition zugeordnet ist,
- einer an der Aufzugkabine (14) angebrachten ersten Erfassungsvorrichtung (32, 132) zum Erfassen einer ersten Positionsmarke (150),
- einer an der Aufzugkabine (14) angebrachten zweiten Erfassungsvorrichtung (33, 133) zum Erfassen einer zweiten Positionsmarke (150),
- wenigstens einer Auswerteeinheit (30, 31, 130, 131) zur Bestimmung
- einer ersten diskreten Kabinenposition auf Basis der von der ersten Erfassungsvorrichtung (32, 132) erfassten ersten Positionsmarke (150) und
- einer zweiten diskreten Kabinenposition auf Basis der von der zweiten Erfassungsvorrichtung (33, 133) erfassten zweiten Positionsmarke (150),
- einer Interpolationseinrichtung (40, 140) zum Bestimmen einer interpolierten Kabinenposition,
wobei die Auswerteeinheit (30, 31, 130, 131) dazu vorgesehen ist, eine erste Kabinenposition auf Basis der ersten diskreten Kabinenposition und einer ersten interpolierten Kabinenposition und eine zweite Kabinenposition auf Basis der zweiten diskreten Kabinenposition und einer zweiten interpolierten Kabinenposition zu bestimmen,
**dadurch gekennzeichnet, dass**
das Positionsbestimmungssystem (28) eine einzige Interpolationseinrichtung (40, 140) aufweist, welche dazu vorgesehen ist,
- eine Interpolations-Kenngrösse zu erzeugen, welche eine Lage der ersten Erfassungsvorrichtung (32, 132) zur ersten Positionsmarke (150) kennzeichnet und
- die erste und zweite interpolierte Kabinenposition auf Basis der selben Interpolations-Kenngrösse zu bestimmen.

2. Positionsbestimmungssystem nach Anspruch 1,
**dadurch gekennzeichnet, dass**
die Interpolationseinrichtung (40) eine Interpolationserfassungsvorrichtung (42) zur Erzeugung der genannten Interpolations-Kenngrösse, eine erste Interpolationsauswerteeinheit (44) zur Bestimmung der ersten interpolierten Kabinenposition und eine zweite Interpolationsauswerteeinheit (45) zur Bestimmung der zweiten interpolierten Kabinenposition aufweist.

3. Positionsbestimmungssystem nach Anspruch 1,
**dadurch gekennzeichnet, dass**
die Interpolationseinrichtung (140) dazu vorgesehen ist, nur eine einzige interpolierte Kabinenposition zu bestimmen, welche als erste und zweite interpolierte Kabinenposition genutzt wird.

4. Positionsbestimmungssystem nach Anspruch 1, 2 oder 3,
**dadurch gekennzeichnet, dass**
die Interpolationseinrichtung (40) mehrere Sensoren (A0.0, A0.1; B0.0, B0.1, A1.0, A1.1) aufweist, wobei jeder der Sensoren (A0.0, A0.1; B0.0, B0.1, A1.0, A1.1) der Interpolationseinrichtung (40) gleichzeitig auch Teil der ersten Erfassungsvorrichtung (32) oder zweiten Erfassungsvorrichtung (33) ist.

5. Positionsbestimmungssystem nach einem der Ansprüche 1 bis 4
**dadurch gekennzeichnet, dass**
- das Positionsbestimmungssystem (28) ein parallel zu einer Verfahrrichtung (22) neben der Aufzugskabine (14) angebrachtes Codemarkenmuster aufweist, wobei n aufeinanderfolgende Codemarken des Codemarkenmusters eine Positionsmarke bilden, Positionsmarken in einer n-stelligen Pseudozufallsfolge verschiedener Positionsmarken eindeutig angeordnet sind und die Positionsmarken ein einspuriges Codemarkenmuster bilden und
- die erste Erfassungsvorrichtung (32) und zweite Erfassungsvorrichtung (33) dazu vorgesehen sind, zur Erfassung der ersten Positionsmarke das Codemarkenmuster berührungslos abzutasten.

6. Positionsbestimmungssystem nach Anspruch 5,
**dadurch gekennzeichnet, dass**
das Codemarkenmuster in Manchester-Codierung codiert ist.

7. Positionsbestimmungssystem nach Anspruch 5 oder 6,
**dadurch gekennzeichnet, dass**
die Codemarken magnetische Pole bilden und dass die Erfassungsvorrichtungen (32, 33) und die Interpolationseinrichtung (40) Hallsensoren aufweisen.

8. Positionsbestimmungssystem nach Anspruch 5, 6 oder 7,
**dadurch gekennzeichnet, dass**
die Interpolationseinrichtung (40) mehrere Sensoren (A0.0, A0.1; B0.0, B0.1, A1.0, A1.1) zum Erfassen von Codemarkenübergängen aufweist, welche in Verfahrrichtung (22) über einen Bereich mit einer Länge grösser als die Länge (2λ) zweier Codemarken in einem Abstand kleiner als die Länge einer Codemarke (λ) angeordnet sind.

9. Positionsbestimmungssystem nach einem der Ansprüche 1 bis 8,
**dadurch gekennzeichnet, dass**
die Auswerteeinheit (30, 31) dazu vorgesehen ist, ein Fehlersignal auszugeben, wenn die erste und zweite diskrete Kabinenposition voneinander abweichen.

10. Aufzuganlage mit einem Positionsbestimmungssystem (28, 128) nach einem der Ansprüche 1 bis 9.

11. Verfahren zur Ermittlung einer Kabinenposition einer in einem Aufzugschacht (12) verfahrbaren Aufzugkabine (14) bei welchem
- im Aufzugschacht (12) angeordnete Positionsmarken (150) ausgewertet werden, wobei jeder Positionsmarke eine diskrete Kabinenposition zugeordnet ist,
- eine an der Aufzugkabine (14) angebrachte erste Erfassungsvorrichtung (32, 132) eine erste Positionsmarke (150) erfasst,
- eine an der Aufzugkabine (14) angebrachte zweite Erfassungsvorrichtung (33, 133) eine zweite Positionsmarke (150) erfasst,
- eine Auswerteeinheit (30, 31, 130, 131)
- eine erste diskrete Kabinenposition auf Basis der von der ersten Erfassungsvorrichtung (32, 132) erfassten ersten Positionsmarke (150) und
- eine zweite diskrete Kabinenposition auf Basis der von der zweiten Erfassungsvorrichtung (33, 133) erfassten zweiten Positionsmarke (150)
bestimmt und
- eine Interpolationseinrichtung (40, 140) eine interpolierte Kabinenposition bestimmt,
wobei die Auswerteeinheit (30, 31, 130, 131) eine erste Kabinenposition auf Basis der ersten diskreten Kabinenposition und einer ersten interpolierten Kabinenposition und eine zweite Kabinenposition auf Basis einer diskreten Kabinenposition und einer zweiten interpolierten Kabinenposition bestimmt,
**dadurch gekennzeichnet, dass**
das Positionsbestimmungssystem (28) eine einzige Interpolationseinrichtung (40, 140) aufweist, welche
- eine Interpolations-Kenngrösse bestimmt, welche eine Lage der ersten Erfassungsvorrichtung (32, 132) zur ersten Positionsmarke (150) kennzeichnet und
- die erste und zweite interpolierte Kabinenposition auf Basis der selben Interpolations-Kenngrösse bestimmt.

## Claims

1. A position determining system for determining a car position of an elevator car (14) movable in an elevator shaft (12), including
- position markers (150) situated in the elevator shaft (12), wherein each position marker (150) is assigned to a discrete car position,
- a first detection device (32, 132) attached to the elevator car (14) for detecting a first position marker (150),
- a second detection device (33, 133) attached to the elevator car (14) for detecting a second position marker (150),
- at least one evaluation unit (30, 31, 130, 131) for determining
- a first discrete car position based on the first position marker (150) detected by the first detection device (32, 132) and
- a second discrete car position based on the second position marker (150) detected by the second detection device (33, 133),
- an interpolation device (40, 140) for determining an interpolated car position,
wherein the evaluation unit (30, 31, 130, 131) is provided for determining a first car position based on the first discrete car position and a first interpolated car position, and a second car position based on the second discrete car position and a second interpolated car position,
**characterized in that**
the position determining system (28) includes a single interpolation device (40, 140), which is provided
- for generating an interpolation parameter, which characterizes a position of the first detection device (32, 132) relative to the first position marker (150) and
- to determine the first and second interpolated car position based on the same interpolation parameter.

2. The position determining system according to claim 1,
**characterized in that**
the interpolation device (40) includes an interpolation detection device (42) for generating the aforementioned interpolation parameter, a first interpolation evaluation unit (44) for determining the first interpolated car position and a second interpolation evaluation unit (45) for determining the second interpolated car position.

3. The position determining system of claim 1,
**characterized in that**
the interpolation device (140) is provided for determining only a single interpolated car position, which is utilized as the first and the second interpolated car position.

4. The position determining system according to claim 1, 2 or 3,
**characterized in that**
the interpolation device (40) includes a plurality of sensors (A0.0, A0.1; B0.0, B0.1, A1.0, A1.1), wherein each of the sensors (A0.0, A0.1; B0.0, B0.1, A1.0, A1.1) of the interpolation device (40) is simultaneously also part of the first detection device (32) or of the second detection device (33).

5. The position determining system according to any of claims 1 through 4,
**characterized in that**
- the position determining system (28) includes a code mark pattern placed next to the elevator car (14) parallel to a direction of travel (22), wherein n consecutive code marks of the code mark pattern form a position marker, position markers are uniquely situated in an n-digit pseudorandom sequence of different position markers, and the position markers form a single-track code mark pattern, and
- the first detection device (32) and the second detection device (33) are provided to scan the code mark pattern in a contact-free manner to detect the first position mark.

6. The position determining system according to claim 5,
**characterized in that**
the code mark pattern is coded in Manchester coding.

7. The position determining system according to claim 5 or 6,
**characterized in that**
the code marks form magnetic poles and that the detection devices (32, 33) and the interpolation device (40) include Hall sensors.

8. The position determining system according to claim 5, 6 or 7,
**characterized in that**
the interpolation means (40) includes multiple sensors (A0.0, A0.1; B0.0, B0.1; A1.0, A1.1) for detecting code mark transitions, which are situated in the direction of travel (22) over a range having a length greater than the length (2λ) of two code marks at a distance smaller than the length of a code mark (λ).

9. The positioning system according to any of claims 1 through 8,
**characterized in that**
the evaluation unit (30, 31) is provided to output an error signal when the first and second discrete car positions differ from each other.

10. An elevator system, including a position determining system (28, 128) according to any of claims 1 through 9.

11. A method for determining a car position of an elevator car (14) movable in an elevator shaft (12), in which
- position markers (150) situated in the elevator shaft (12) are evaluated, wherein each position marker is assigned a discrete car position,
- a first detection device (32, 132) attached to the elevator car (14) detects a first position marker (150),
- a second detection device (33, 133) attached to the elevator car (14) detects a second position marker (150),
- an evaluation unit (30, 31, 130, 131) determines
- a first discrete car position based on the first position marker (150) detected by the first detection device (32, 132) and
- a second discrete car position based on the second position marker (150) detected by the second detection device (33, 133)
and
- an interpolation device (40, 140) determines an interpolated car position,
wherein the evaluation unit (30, 31, 130, 131) determines a first car position on the basis of the first discrete car position and a first interpolated car position, and a second car position on the basis of a discrete car position and a second interpolated car position,
**characterized in that**
the position determining system (28) includes a single interpolation device (40, 140) which
- determines an interpolation parameter, which characterizes a position of the first detection device (32, 132) relative to the first position marker (150) and
- determines the first and second interpolated car positions based on the same interpolation parameter.

## Revendications

1. Système de détermination de position permettant de déterminer une position de cabine d'une cabine d'ascenseur (14) pouvant être déplacée dans une cage d'ascenseur (12), comportant
- des repères de position (150) disposés dans la cage d'ascenseur (12), chaque repère de position (150) étant associé à une position discrète de cabine,
- un premier dispositif de détection (32, 132) fixé à la cabine d'ascenseur (14) et permettant de détecter un premier repère de position (150),
- un second dispositif de détection (33, 133) fixé à la cabine d'ascenseur (14) et permettant de détecter un second repère de position (150),
- au moins une unité d'évaluation (30, 31, 130, 131) permettant de déterminer
- une première position discrète de cabine sur la base du premier repère de position (150) détecté par le premier dispositif de détection (32, 132) et
- une seconde position discrète de cabine sur la base du second repère de position (150) détecté par le second dispositif de détection (33, 133),
- un moyen d'interpolation (40, 140) permettant de déterminer une position de cabine interpolée,
l'unité d'évaluation (30, 31, 130, 131) étant prévue pour déterminer une première position de cabine sur la base de la première position de cabine discrète et d'une première position de cabine interpolée et une seconde position de cabine sur la base de la seconde position de cabine discrète et d'une seconde position de cabine interpolée,
**caractérisé en ce que**
le système de détermination de position (28) présente un seul moyen d'interpolation (40, 140), lequel est prévu
- pour générer une grandeur caractéristique d'interpolation qui identifie un positionnement du premier dispositif de détection (32, 132) par rapport au premier repère de position (150) et
- pour déterminer la première et la seconde position de cabine interpolée sur la base de la même grandeur caractéristique d'interpolation.

2. Système de détermination de position selon la revendication 1,
**caractérisé en ce que**
le moyen d'interpolation (40) présente un dispositif de détection d'interpolation (42) permettant de générer ladite grandeur caractéristique d'interpolation, une première unité d'évaluation d'interpolation (44) permettant de déterminer la première position de cabine interpolée et une seconde unité d'évaluation d'interpolation (45) permettant de déterminer la seconde position de cabine interpolée.

3. Système de détermination de position selon la revendication 1,
**caractérisé en ce que**
le moyen d'interpolation (140) est prévu pour ne déterminer qu'une seule position de cabine interpolée, laquelle est utilisée comme première et seconde position de cabine interpolée.

4. Système de détermination de position selon la revendication 1, 2 ou 3, **caractérisé en ce que**
le moyen d'interpolation (40) comporte plusieurs capteurs (A0.0, A0.1 ; B0.0, B0.1, A1.0, A1.1), chaque capteur (A0.0, A0.1 ; B0.0, B0.1, A1.0, A1.1) du moyen d'interpolation (40) faisant aussi simultanément partie du premier dispositif de détection (32) ou du second dispositif de détection (33).

5. Système de détermination de position selon l'une des revendications 1 à 4, **caractérisé en ce que**
- le système de détermination de position (28) présente un motif de repère de code fixé à côté de la cabine d'ascenseur (14), parallèlement à une direction de déplacement (22), n repères de code successifs du motif de repère de code formant un repère de position, les repères de position étant clairement disposés en une séquence pseudo-aléatoire à n chiffres de différents repères de position et les repères de position formant un motif de repère de code à une seule piste et
- le premier dispositif de détection (32) et le second dispositif de détection (33) sont prévus pour balayer le motif de repère de code sans contact afin de détecter le premier repère de position.

6. Système de détermination de position selon la revendication 5,
**caractérisé en ce que**
le motif de repère de code est codé en codage Manchester.

7. Système de détermination de position selon la revendication 5 ou 6,
**caractérisé en ce que**
les repères de code forment des pôles magnétiques et **en ce que** les dispositifs de détection (32, 33) et le moyen d'interpolation (40) présentent des capteurs à effet Hall.

8. Système de détermination de position selon la revendication 5, 6 ou 7,
**caractérisé en ce que**
le moyen d'interpolation (40) présente plusieurs capteurs (A0.0, A0.1 ; B0.0, B0.1, A1.0, A1.1) permettant de détecter des transitions de repère de code, lesquels capteurs sont disposés dans la direction de déplacement (22) sur une zone d'une longueur supérieure à la longueur (2λ) de deux repères de code, à une distance inférieure à la longueur d'un repère de code (λ).

9. Système de détermination de position selon l'une des revendications 1 à 8,
**caractérisé en ce que**
l'unité d'évaluation (30, 31) est prévue pour émettre un signal d'erreur si les première et seconde positions discrètes de cabine diffèrent l'une de l'autre.

10. Installation d'ascenseur comportant un système de détermination de position (28, 128) selon l'une des revendications 1 à 9.

11. Procédé de détermination d'une position de cabine d'une cabine d'ascenseur (14) pouvant être déplacée dans une cage d'ascenseur (12), selon lequel
- les repères de position (150) disposés dans la cage d'ascenseur (12) sont évalués, chaque repère de position étant associé à une position discrète de cabine,
- un premier dispositif de détection (32, 132) fixé à la cabine d'ascenseur (14) détecte un premier repère de position (150),
- un second dispositif de détection (33, 133) fixé à la cabine d'ascenseur (14) détecte un second repère de position (150),
- une unité d'évaluation (30, 31, 130, 131) détermine
- une première position discrète de cabine sur la base du premier repère de position (150) détecté par le premier dispositif de détection (32, 132) et
- une seconde position discrète de cabine sur la base du second repère de position (150) détecté par le second dispositif de détection (33, 133) et
- un moyen d'interpolation (40, 140) détermine une position de cabine interpolée, l'unité d'évaluation (30, 31, 130, 131) déterminant une première position de cabine sur la base de la première position discrète de cabine et d'une première position de cabine interpolée et une seconde position de cabine sur la base d'une position de cabine discrète et d'une seconde position de cabine interpolée déterminée,
**caractérisé en ce que**
le système de détermination de position (28) présente un seul moyen d'interpolation (40, 140), lequel
- détermine une grandeur caractéristique d'interpolation, laquelle identifie un positionnement du premier dispositif de détection (32, 132) par rapport au premier repère de position (150) et
- détermine la première et la seconde position de cabine interpolée sur la base du même paramètre d'interpolation.
